# EUROPEAN PATENT SPECIFICATION

(11) **EP 0 646 552 B1**
(45) Date of publication and mention of the grant of the patent: **17.12.1997**
(21) Application number: 94306933.6
(22) Date of filing: 21.09.1994
(51) Int. Cl.: C03C 25/02

(54) **Method of curing dual-coated optical fiber**
Verfahren zur Aushärtung von zweifach beschichteten optischen Fasern
Méthode pour le durcissement de revêtements sur un fibre optique à deux couches

(30) Priority: 30.09.1993 US 129514
(43) Date of publication of application: 05.04.1995
(73) Proprietor: AT&T Corp., New York, NY 10013-2412 (US)
(72) Inventor: Baron, William James, Alpharetta, Georgia 30202 (US); Moore, Robert Clark, Roswell, Georgia 30076 (US); Petisce, James Raymond, Norcross, Georgia 30093 (US); Taylor, Carl Raymond, Lawrenceville, Georgia 30243 (US)
(74) Representative: Johnston, Kenneth Graham

(56) References cited:
- EP-A- 0 442 658
- GB-A- 2 132 509
- DATABASE WPI Week 8909, Derwent Publications Ltd., London, GB; AN 89-065968 & JP-A-1 018 948 (SUMITOMO ELECTR. IND KK) 23 January 1989
- DATABASE WPI Week 8932, Derwent Publications Ltd., London, GB; AN 89-231620 & JP-A-1 167 264 (FUJIKURA CABLE WORKS KK) 30 June 1989
- DATABASE WPI Week 8636, Derwent Publications Ltd., London, GB; AN 86-236274 & JP-A-61 166 505 (FURUKAWA ELECTRIC CO.) 28 July 1986

## Description

### Technical Field

This invention relates to coated optical fibers and to a method of making same. More particularly, the invention relates to an optical fiber having inner and outer layers of curable coating materials that are individually cured by radiation at different wavelengths of the electromagnetic spectrum.

### Background of the Invention

In the manufacture of optical fiber, a glass preform rod is suspended vertically and moved into a furnace at a controlled rate. The preform softens in the furnace and a glass fiber (also referred to as an optical fiber) is drawn freely from the molten end of the preform rod by a capstan located at the base of a draw tower.

Because the surface of the glass fiber is susceptible to damage caused by abrasion, it is necessary to coat the fiber after it is drawn but before it comes into contact with any surface. Inasmuch as the application of a coating material must not damage the glass surface, the coating material is applied in a liquid state. Once applied, the coating material must solidify before the glass fiber reaches the capstan. This is typically accomplished within a brief time interval by photocuring -- a process in which the liquid coating material is converted to a solid by exposure to electromagnetic radiation.

Those optical fiber performance properties which are affected most by the coating material are strength and transmission loss. Coating defects which may expose the optical fiber to subsequent damage arise primarily from improper application of the coating material. Defects such as large bubbles or voids, non-concentric coatings with unacceptably thin regions, or intermittent coatings must be prevented. Intermittent coating is overcome by insuring that the fiber is suitably cool at its point of entry into the coating applicator to avoid coating flow instabilities. Coating concentricity can be monitored and adjustments made to maintain an acceptable value.

Optical fibers are susceptible to a transmission loss mechanism known as microbending. Because the fibers are thin and flexible, they are readily bent when subjected to mechanical stresses such as those encountered during handling or exposure to varying temperature environments. If the stresses placed on the fiber result in a random bending distortion of the fiber axis with periodic components in the millimeter range, light rays, or modes, propagating in the fiber may escape from the core. These losses, termed microbending losses, may be very large, often many times the intrinsic loss of the fiber itself. The optical fiber must be isolated from stresses which cause microbending. The properties of the optical fiber coating material play a major role in providing this isolation -- coating geometry, modulus and thermal expansion coefficient being the most important factors.

Typically, two layers of coating materials are applied to the drawn optical fiber, and two different kinds of coating materials are used. An inner layer, referred to as a primary coating material, is applied to the optical glass fiber. And an outer layer, referred to as a secondary coating material, is applied to the primary coating material. Usually, the secondary coating material has a relatively high modulus, e. g. 10⁹ Pa, whereas the primary coating material has a relatively low modulus such as, for example, 10⁶ Pa. In one arrangement, the primary and the secondary coating materials are advantageously applied at substantially the same time. Such an arrangement is referred to as a "wet/wet" system because the secondary coating is applied directly to a non-cured primary coating. See for example, U.S. Patent 4,474,830 in which both the inner and the outer layers of coating materials are cured beginning from the outside progressing inwardly. The primary and secondary coating materials comprise materials which are cured by exposure to electromagnetic radiation. The coating materials are characterized by a photoactive region, i.e., a range of wavelengths within the electromagnetic spectrum which are absorbed by the liquid coating material and cause it to change to a solid.

It is important that both coatings be fully cured and that the curing process proceed rapidly -- a concern that has been addressed in the prior art by a process in which the primary coating material is applied to the glass fiber and cured after which a secondary coating material is applied and cured. This process suffers from the drawback that multiple coating applicators and curing stations are required which increases cost, complexity and opportunity for equipment malfunction. U.S. Patent 5,015,068 discloses the application of both primary and secondary coatings at nearly the same time, but still requires two curing stations -- the first one using visible light to cure the primary coating and the second one using ultraviolet light to cure the secondary coating. By curing the primary coating first, the problem that the secondary coating becomes opaque to curing wavelengths, and thus retards the cure of the primary coating, is overcome. However, two curing stations are required which add to the cost and complexity of the overall system. Further, use of a photoinitiator that responds to radiation in the visible portion of the electromagnetic spectrum leads to certain difficulties in handling of the primary coating material.

Recently it has been learned that the curing speed of the primary coating material is much slower at high temperatures, and that substantial heat is released when the secondary coating material changes from a liquid into a solid.

What is needed, and seemingly what is not disclosed in the prior art, is a method for curing a wet/wet coating system which only uses a single radiation source and is capable of being integrated with present manufacturing arrangements for drawing optical fiber from a preform.

### Summary of the Invention

The foregoing problems of the prior art have been solved by a method of making a coated optical fiber in which primary and secondary coating materials are applied to a glass fiber and then simultaneously cured. The primary coating material encloses and engages the glass fiber while the secondary coating material encloses and engages the primary coating material. A photoinitiator is added to each of the primary and secondary coating materials which respond to electromagnetic radiation from one or more curing lamps having identical emission spectra; but, the photoinitiator added to the primary coating is selected to be substantially more responsive to the radiation than the photoinitiator added to the secondary coating material.
In an illustrative embodiment, the photoinitiator added to the primary coating material responds to a first wavelength region of the electromagnetic emission spectrum of the curing lamp, while the photoinitiator added to the secondary coating material responds to a second wavelength region of its electromagnetic emission spectrum. In this embodiment, the radiated energy in the first region is substantially greater than the radiated energy in the second region. In the illustrative embodiment of the invention, the first and second spectral regions reside within the ultraviolet portion of the electromagnetic spectrum. The typical advantages of standardization accompany the use of curing lamps having the same spectral emission characteristic.

Other features of the present invention will be more readily understood from the following detailed description of specific embodiments thereof when read in conjunction with the accompanying drawings, in which:
FIG. 1 is a schematic view of a manufacturing line for drawing optical fiber from a preform in accordance with the present invention;
FIG. 2 is an end view in section of a dual-coated optical fiber;
FIG. 3 is a histogram which shows the emission output of a commercially-available curing lamp which is suitable for use in the present invention;
FIG. 4 is a graph depicting a plot of absorbance vs. wavelength of a photoinitiator which responds to radiation in the 386 nanometer region of the electromagnetic spectrum;
FIG. 5 is a graph depicting a plot of absorbance vs. wavelength of two concentrations of a photoinitiator which responds to radiation in the 330 nanometer region of the electromagnetic spectrum;
FIG. 6 is a graph depicting in-situ modulus as a function of incident energy for different combinations of primary and secondary photoinitiators; and
   FIG. 7 is a graph depicting pullout force as a function of incident energy for different combinations of primary and secondary photoinitiators.

### Detailed Description

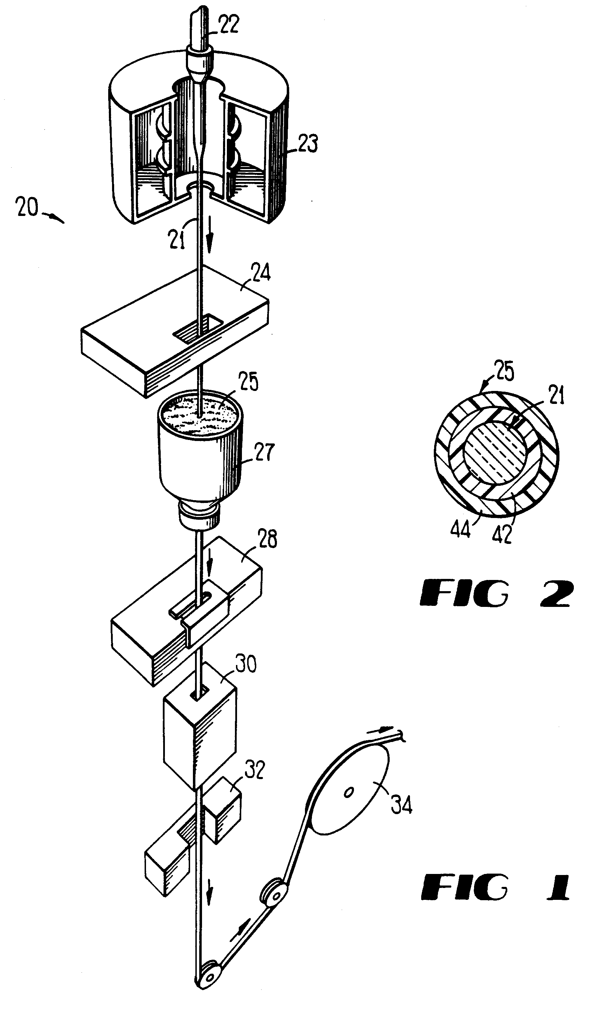

Referring now to FIG. 1, there is shown an apparatus which is designated generally by the numeral 20 and in which is used to draw optical fiber 21 from a specially prepared cylindrical preform 22 and for then coating the drawn fiber. The optical fiber 21 is formed by locally and symmetrically heating the preform 22, typically 15 to 40 mm in diameter and 60 cm in length, to a temperature of about 2000XC. As the preform is fed into and through a furnace 23, fiber 21 is drawn from the molten material.

As can be seen in FIG. 1, the elements of the draw system include the furnace 23 wherein the preform is drawn down to the fiber size after which the fiber 21 is pulled from a heat zone therein. The diameter of the fiber 21 is measured by a device 24 at a point shortly after the fiber is formed and this measured value becomes an input into a control system. Within the control system, the measured diameter is compared to the desired value and an output signal is generated to adjust the draw speed such that the fiber diameter approaches the desired value.

After the diameter of the optical fiber 21 is measured, a protective coating system 25 (see also FIG. 2) is applied to the fiber by an apparatus 27. Preservation of fiber strength requires the application of the protective coating, which shields newly drawn fiber from the deleterious effects of the atmosphere. This coating system must be applied in a manner that does not damage the surface of the fiber 21 and such that the fiber has a predetermined diameter and is protected from abrasion during subsequent manufacturing operations, installation and service. Minimizing attenuation requires the selection of a suitable coating material and a controlled application of it to the fiber. Such a coating apparatus may be one such as described in previously identified U.S. Patent 4,474,830. Minimizing diameter variation which in turn minimizes the losses due to misalignment at connector and splice points requires careful design of the draw system and the continuous monitoring and control of the fiber diameter during the drawing and the coating steps of the process. Then, the coated fiber 21 is passed through a centering gauge 28.

After the coating materials have been applied to the drawn fiber, the coating materials must be cured. Accordingly, the optical fiber having the coating materials thereon is passed through a device 30 for curing the coating system and a device 32 for measuring the outer diameter of the coated fiber. Afterwards, it is moved through a capstan 34 and is spooled for testing and storage prior to subsequent cable operations.

In the apparatus 27, the coating system 25 comprising two coating materials are applied to the optical fiber. The coating system 25 includes an inner layer 42 (see FIG. 2), which often is referred to as a primary coating layer, and an outer layer 44, which often is referred to as a secondary coating material. The coating material of the inner layer, which has a substantially lower modulus than that of the outer layer, is such that it prevents microbending of the optical glass fiber. On the other hand, the higher modulus outer layer provides mechanical protection for the drawn glass fiber.

Each of the coating materials is curable by being exposed to an appropriate portion of the electromagnetic spectrum. Such cure is accomplished via a reactive polymer that can polymerize by free radical polymerization. Generally, each of the coating materials includes an oligomer, a diluent and a photoinitiator. Also included may be additives such as, for example, antioxidants, adhesion promoters, ultraviolet (UV) light stabilizers, surfactants and shelf life stabilizers. Of particular interest in connection with the present invention are the photoinitiators which, in response to electromagnetic radiation within a narrow range of wavelengths, cause the coating material to change from a liquid to a solid. This change of state is accompanied by the release of heat which affects on the speed at which the coating material changes state. Photoinitiators may be customized to respond (i.e., initiate free radical polymerization) in different regions of the electromagnetic spectrum --typically in the ultraviolet (UV) region.

It has been learned that the equilibrium modulus of a UV-cured coating is directly proportional to the crosslink density, and that the equilibrium modulus of a coating decreases with increasing cure temperature. See, e.g., "The Effects of Cure Temperature on the Thermomechanical Properties of UV Curable Coatings," *Polymer Engineering and Science*, Vol 29, No. 17, Sept., 1989 (pages 1165-1168). Therefore, it is highly desirable to cure the polymer coatings at a relatively low temperature (e.g., 20°C rather than 200°C). Furthermore, approximately 70% of the heat (temperature rise) associated with the curing process is generated by the reaction itself while only about 30% comes from the curing lamp. Accordingly, it is most important to accelerate curing of the inner (primary) coating material before the heat of reaction --generated by the outer (secondary) coating material as it polymerizes -- adversely affects its curing rate.

Referring now to the end view of a dual-coated optical fiber shown in FIG. 2, the coating material of primary layer 42 is formulated such that it cures upon exposure to different region of the electromagnetic spectrum than does the secondary layer 44. The region is typically designated by a wavelength at about the center the region. For example, the wavelength region used to initiate free radical polymerization of the primary coating material is designated λₚ, and the wavelength region used to initiate free radical polymerization of the secondary coating material is designated λₛ. One way to achieve simultaneous curing of the primary and secondary coating materials using the emission spectrum of a single source of electromagnetic radiation is to use two identical curing lamps which individually emit λₚ and λₛ, and then adding a "screen" in the top lamp of curing station 30 (see FIG. 1) to block a portion of λₛ until the primary coating has been partially or fully cured. A convenient implementation of such an arrangement is a vertical stacking of two curing lamps and two glass tubes (screens). The top glass tube is made from borosilicate glass, which attenuates electromagnetic radiation having wavelengths of 350 nm or less; while the bottom glass tube is made from quartz glass, which is virtually transparent. Naturally, the photoinitiator associated with the primary coating would respond to wavelengths that are greater than 350 nm, while the photoinitiator associated with the secondary coating would respond to wavelengths that are less than 350 nm. A dual-coated optical fiber moves through these glass tubes and the curing of its primary coating is accelerated with respect to the secondary coating. A tube diameter of two inches, is acceptable for most applications, but the wall thickness of the borosilicate glass is empirically determined based on the amount of attenuation of λₛ that is desired. Nevertheless, it is desirable to further improve this arrangement by eliminating the need for different glass tubes.

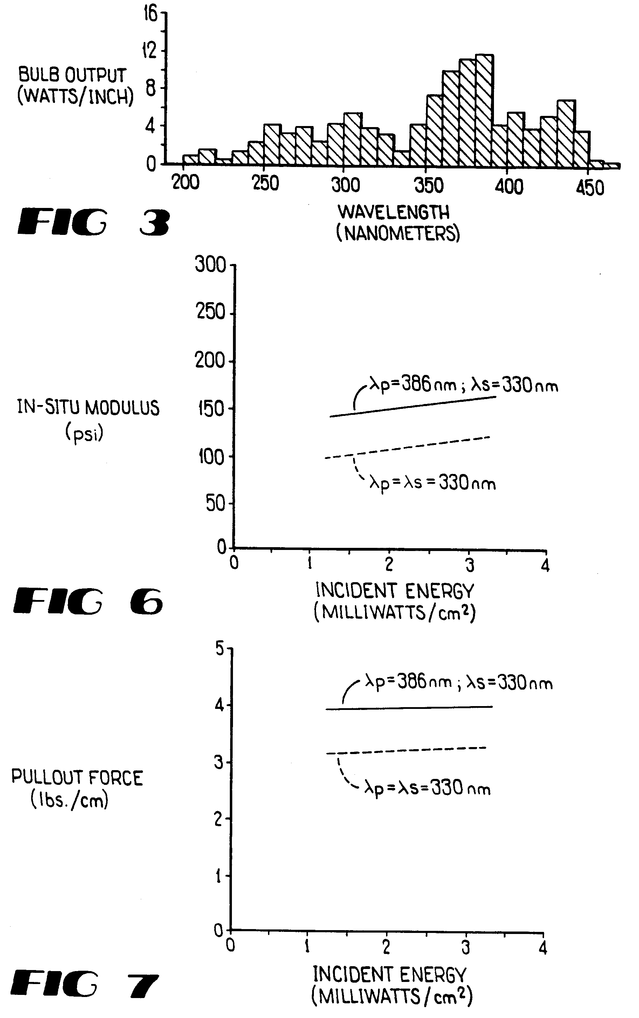

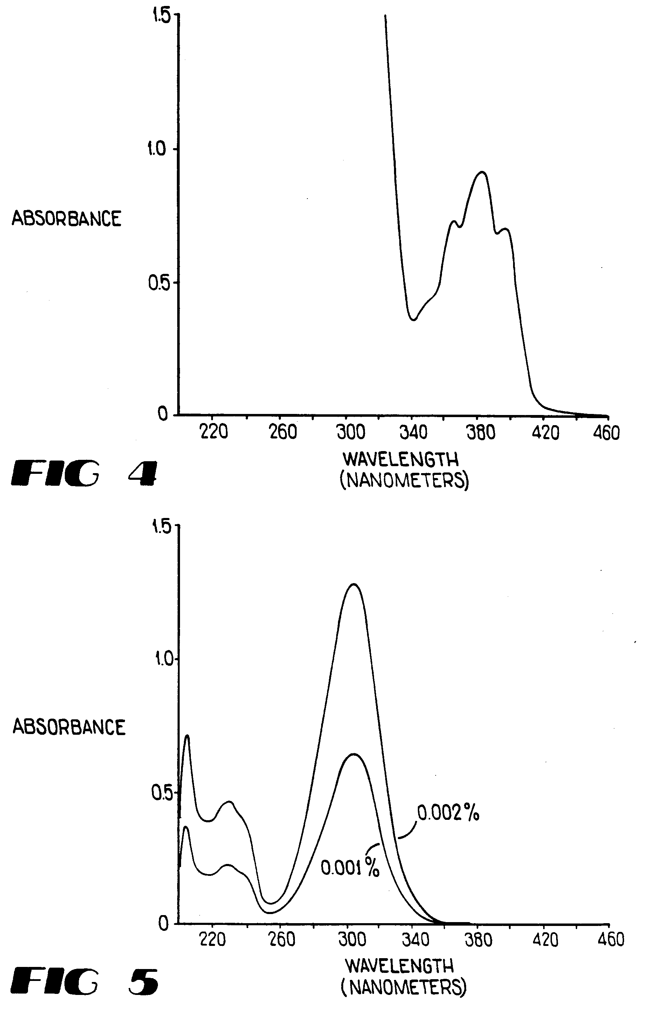

FIG. 3 is a histogram which shows the emission output of a curing lamp which is suitable for use in the present invention. The specific output spectrum shown is produced by a non-mercury "D" lamp which is commercially-available from Fusion Systems Corporation. In particular, advantage is taken of the fact that emission in the region λ = 386 nanometers (nm) is substantially greater than emission in other regions of its spectrum. Accordingly, a photoinitiator that responds to electromagnetic radiation in the λ = 386 nm region is selected for use with the primary coating material so that it will cure at a faster rate than the secondary coating material -- which has a photoinitiator that responds to electromagnetic radiation in another wavelength region. In this regard, a photoinitiator having maximum absorbance at 382 nm is chemically known as 2,4,6-Trimethylbenzoyldiphenylphosphine oxide and is suitable for use with the primary coating material. It is commercially known as Lucirin TPO and is available from the BASF Company. FIG. 4 shows the absorbance spectrum of Lucirin TPO in greater detail which has been specially selected to match the emission peak of the curing lamp. Together, they cooperate to accelerate the curing rate of the primary coating material.

Referring once again to FIG. 3, another region of the emission spectrum of the curing lamp is selected for use in curing the secondary coating material. In this illustrative embodiment, the wavelength region in the vicinity of 330 nm is selected because the lamp output is substantially less in that region than in the 386 nm wavelength region. For the secondary coating, one suitable photoinitiator is a 2-methyl--[4-(methylthio)phenyl]-2-(4morpholinyl)-1-propanone, such as Irgacure 907, which is commercially available from the Ciba Giegy Company and whose absorbance spectrum is shown in FIG. 5 for various concentrations. Irgacure 907 exhibits maximum absorbance at 300 nm which, it is noted, does not necessarily coincide with any special region of the lamp's emission spectrum. Rather, it was selected via trial and error from a lower emission region of the spectrum than the region used for curing the primary coating material. Indeed, given the emission spectrum of the curing lamp, it would only require a small amount of experimentation by one of ordinary skill in the chemical art, to select acceptable photoinitiators for use with the primary and secondary coating materials. By thus accelerating the cure of the primary coating material before the hat released by polymerization of the secondary coating material becomes a detrimental factor, a single radiation source can be used to simultaneously cure both primary and secondary coating materials. Another suitable photoinitiator which may be used in the secondary coating is a 1-hydroxycyclohexyl phenyl ketone, such as Irgacure 184. This photoinitiator is also commercially available from the Ciba Geigy Company.

As shown in FIG. 5, the absorbance of the photoinitiator is increased approximately in proportion to its concentration. Here, concentrations of 0.001% and 0.002% are shown increasing the peak absorbance by a factor of 2. The wellknown, practical range for photoinitiators resides between 0.5% and 5.0% by weight for most UV formulations having commercial utility.

### Results

Suitable curing of an optical fiber coating is very important because one that is improperly cured will inhibit cabling. Also, an undercured coating material frequently emits an undesirable odor, an exhibits poor strippability, poor adhesion and poor reliability relative to a properly cured coating. As should be evident, properly cured coating materials for drawn optical fibers are important to the quality of the final product. Further, the modulus of the cured material is a function of the degree of cure. Modulus is important to the mechanical and optical performance of the optical fiber product.

Presently, there are several methods which are used to determine the degree of cure of optical fiber coating materials. In one method, referred to as the in-situ modulus test, a cut is made through the coating or coating layers to the glass. A load is applied to the optical fiber and measurements are taken as to the time during which the load is applied to the fiber and the distance through which the optical fiber moves. From these measurements, the modulus of the coatings can be determined. FIG. 6 is a graph depicting the results of an in-situ modulus test, performed on the present invention, as a function of incident energy for different combinations of primary and secondary photoinitiators. The dotted line results of the in-situ modulus test were obtained using photoinitiators in the primary and secondary coating materials at appropriate concentration levels; the photoinitiators were selected to respond to electromagnetic radiation in the same wavelength region (λₚ = λₛ = 330 nm). The solid line results of the in-situ modulus test were obtained using photoinitiators in the primary and secondary coating materials, at appropriate concentration levels, which respond to electromagnetic radiation in two different wavelength regions (λₚ = 386 nm, and λₛ = 330 nm). The results show an approximate 40% increase in the in-situ modulus which represents an important improvement because it enables a substantial increase in the draw speed of the dual-coated optical fiber. These results are confirmed by the below-discussed pullout test.

In a pullout test, a length of optical fiber is positioned in a well-known, Instron apparatus. The force which is necessary to pull the optical fiber from the coating material is measured. This measurement is proportional to the degree of cure. FIG. 7 is a graph depicting the results of a pullout test, performed on Embodiment I of the present invention, as a function of incident energy for different combinations of primary and secondary photoinitiators. (Similar results are anticipated for Embodiment II of the invention). The dotted line results of the pullout test were obtained using photoinitiators in the primary and secondary coating materials at appropriate concentration levels; the photoinitiators were selected to respond to electromagnetic radiation in the same wavelength region (λₚ = λₛ = 330 nm). The solid line results of the pullout test were obtained using photoinitiators in the primary and secondary coating materials, at appropriate concentration levels, which respond to electromagnetic radiation in two different wavelength regions (λₚ = 386 nm, and λs = 330 nm). Similar to the results of in-situ modulus testing, these results show an approximate 40% increase in pullout force confirming that use of the present invention provides a substantial improvement in curing rate.

Although various particular embodiments have been shown and described, it is understood that other arrangements may be devised by those skilled in the art which will embody the principles of the invention.

These other arrangements include, but are not limited to, the use of curing lamps and photoinitiators other than disclosed herein, the use of a screen to decrease electromagnetic radiation at wavelengths associated with the secondary coating material rather than relying on a decreased region of radiation in the emission spectrum of the curing lamp, and the use of the present invention in connection with processes for obtaining glass fibers other than drawing it from a preform.

## Claims

1. A method of curing a dual-coated optical fiber, comprising the steps of:
applying a primary coating material (42) to a glass fiber (21), the primary coating material including a first photoinitiator which is responsive to electromagnetic radiation residing in a first wavelength region;
applying a secondary coating material (44) to the primary coating material, the secondary coating material including a second photoinitiator which is different than the first photoinitiator and which is responsive to electromagnetic radiation residing in a second wavelength region that is disjoint from the first wavelength region; and
similtaneously exposing the primary and secondary coating materials to electromagnetic radiation whose emission spectrum has a peak intensity in the vicinity of the first wavelength region, and a substantially lower intensity in the vicinity of the second wavelength region; whereby, the curing rate of the primary coating material is increased with respect to the curing rate of the secondary coating material.

2. The method of claim 1 further including the steps of:
drawing the glass fiber (21) from a preform (22) prior to applying said primary (42) and secondary (44) coating materials; and
taking up the drawn glass fiber onto a take-up reel after the primary and secondary coating materials have been cured.

3. The method of claim 1 wherein the first photoinitiator comprises 2,4,6-Trimethylbenzoyldiphenylphosphine oxide.

4. The method of claim 1 wherein the second photoinitiator comprises 1-hydroxycyclohexyl phenyl ketone.

5. The method of claim 1 wherein the second photoinitiator comprises 2-methyl--[4-(methylthio)phenyl]-2-(4morpholinyl)-1-propanone.

6. The method of claim 1 wherein the first and second wavelength regions reside in the ultraviolet portion of the electromagnetic spectrum.

7. The method of claim 1 wherein the first wavelength region includes 386 nanometers.

8. The method of claim 1 wherein the second wavelength region includes 330 nanometers.

## Patentansprüche

1. Verfahren zum Aushärten einer zweifach beschichteten Lichtleitfaser mit folgenden Verfahrensschritten:
Aufbringen eines primären Beschichtungsmaterials (42) auf eine Glasfaser (21), wobei das primäre Beschichtungsmaterial einen ersten Photoinitiator umfaßt, der auf elektromagnetische Strahlung anspricht, deren Wellenlänge in einem ersten Wellenlängenbereich liegt;
Aufbringen eines sekundären Beschichtungsmaterials (44) auf das primäre Beschichtungsmaterial, wobei das sekundäre Beschichtungsmaterial einen von dem ersten Photoinitiator verschiedenen zweiten Photoinitiator umfaßt, der auf elektromagnetische Strahlung anspricht, deren Wellenlänge in einem zweiten Wellenlängenbereich liegt, der mit dem ersten Wellenlängenbereich nicht zusammenhängt; und
gleichzeitiges Bestrahlen des primären und sekundären Beschichtungsmaterials mit der elektromagnetischen Strahlung, deren Emissionsspektrum in der Nachbarschaft des ersten Wellenlängenbereichs eine maximale Intensität und in der Nachbarschaft des zweiten Wellenlängenbereichs eine wesentlich geringere Intensität aufweist, wobei die Aushärtungsgeschwindigkeit des primären Beschichtungsmaterials größer ist als die Aushärtungsgeschwindigkeit des sekundären Beschichtungsmaterials.

2. Verfahren nach Anspruch 1 mit folgenden zusätzlichen Verfahrensschritten:
Ziehen der Glasfaser (21) aus einer Vorform (22) vor dem Aufbringen des primären und sekundären Beschichtungsmaterials (42 bzw. 44); und
Aufwickeln der gezogenen Glasfaser auf einer Aufwickelspule nach dem Aushärten des primären und sekundären Beschichtungsmaterials.

3. Verfahren nach Anspruch 1,
wobei der erste Photoinitiator 2,4,6,-Trimethylbenzoyldiphenylphosphinoxid umfaßt.

4. Verfahren nach Anspruch 1,
wobei der zweite Photoinitiator 1-Hydroxycyclohexylphenylketon umfaßt.

5. Verfahren nach Anspruch 1,
wobei der zweite Photoinitiator 2-Methyl-[4-(Methylthio)phenyl]-2-(4-Morpholinyl)-1-Propanon umfaßt.

6. Verfahren nach Anspruch 1,
wobei der erste und der zweite Wellenbereich im ultravioletten Bereich des elektromagnetischen Spektrums liegen.

7. Verfahren nach Anspruch 1,
wobei der erste Wellenlängenbereich eine Wellenlänge von 386 nm umfaßt.

8. Verfahren nach Anspruch 1,
wobei der zweite Wellenlängenbereich eine Wellenlänge von 330 nm umfaßt.

## Revendications

1. Procédé de durcissement d'une fibre optique à revêtement à deux couches, comprenant les stades de :
application d'une matière (42) de revêtement primaire à une fibre (21) de verre, la matière de revêtement primaire renfermant un premier photoinitiateur qui est sensible à un rayonnement électromagnétique se trouvant dans une première région de longueurs d'onde ;
application d'une matière (44) de revêtement secondaire à la matière de revêtement primaire, la matière de revêtement secondaire renfermant un second photoinitiateur qui est différent du premier photoinitiateur et qui est sensible à un rayonnement électromagnétique se trouvant dans une seconde région de longueurs d'onde, qui est disjointe de la première région de longueurs d'onde; et
l'exposition simultanée des matières de revêtement primaire et secondaire à un rayonnement électromagnétique dont le spectre d'émission a une intensité de pic au voisinage de la première région de longueurs d'onde et une intensité sensiblement moindre au voisinage de la seconde région de longueurs d'onde de manière à augmenter la vitesse de durcissement de la matière de revêtement primaire par rapport à la vitesse de durcissement de la matière de revêtement secondaire.

2. Procédé suivant la revendication 1 comprenant en outre les stades de :
tirage de la fibre (21) de verre d'une préforme (22) avant l'application des matières de revêtement primaire (42) et secondaire (44) ; et
enroulement de la fibre tirée de verre sur une roue d'enroulement, après que les matières de revêtement primaire et secondaire ont été durcies.

3. Procédé suivant la revendication 1, dans lequel le premier photoinitiateur renferme de l'oxyde de 2,4,6-trimethylbenzoyldiphénylphosphine.

4. Procédé suivant la revendication 1, dans lequel le second photoinitiateur renferme de la 1-hydroxycyclohexyl phényl cétone.

5. Procédé suivant la revendication 1, dans lequel le second photoinitiateur renferme de la 2-méthyl--[4-(méthylthio)phényl]-2-(4morpholinyl) -1-propanone.

6. Procédé suivant la revendication 1, dans lequel les premières et secondes régions de longueurs d'onde sont dans le domaine ultraviolet du spectre électromagnétique.

7. Procédé suivant la revendication 1, dans lequel la première région de longueurs d'onde inclut la longueur d'onde de 386 nanomètres.

8. Procédé suivant la revendication 1, dans lequel la seconde région de longueurs d'onde inclut la longueur d'onde de 330 nanomètres.
